**Europäisches Patentamt**

**European Patent Office**

**Office européen des brevets**

(11) Veröffentlichungsnummer : **0 167 926**
**B1**

(12) **EUROPÄISCHE PATENTSCHRIFT**

(45) Veröffentlichungstag der Patentschrift :
28.09.88

(51) Int. Cl.⁴ : **G 02 B 21/20**, G 02 B 21/22

(21) Anmeldenummer : **85107879.0**

(22) Anmeldetag : **25.06.85**

(54) Mikroskop mit einem binokularen Tubus.

(30) Priorität : 29.06.84 CH 3157/84

(43) Veröffentlichungstag der Anmeldung :
15.01.86 Patentblatt 86/03

(45) Bekanntmachung des Hinweises auf die Patenterteilung : 28.09.88 Patentblatt 88/39

(84) Benannte Vertragsstaaten :
AT CH DE FR GB IT LI

(56) Entgegenhaltungen :
CH-A-  565 379
FR-A- 1 107 626
GB-A-  616 854

(73) Patentinhaber : WILD HEERBRUGG AG.
CH-9435 Heerbrugg (CH)

(72) Erfinder : Fehr, Erwin
Gartenstrasse 14
CH-9435 Heerbrugg (CH)
Erfinder : Schaefer, Andreas, Dr.
Sonnenstrasse 1
CH-9436 Balgach (CH)

(74) Vertreter : EGLI-EUROPEAN PATENT ATTORNEYS
Horneggstrasse 4
CH-8008 Zürich (CH)

**Beschreibung**

Die vorliegende Erfindung betrifft ein Mikroskop gemäss dem Oberbegriff des Anspruchs 1.

Ein derartiges Mikroskop ist in DE-C-2525798 (WILD Heerbrugg AG) beschrieben. Nachteilig ist allerdings bei diesem Mikroskop, dass die Okulare vom Objektiv ständig, d. h. in jeder Verschiebungsstellung desselben, Licht erhalten. Bei seitlich verschobenen Objektiv lassen daher die beiden Okulare den beobachteten Gegenstand gleichzeitig unter verschiedenen Betrachtungswinkeln sehen, die ausserdem von der Verschiebungsstellung abhängig sind und damit variieren, was der Betrachter als störend empfindet.

Aufgabe der Erfindung ist es, diesen Nachteil des bekannten Mikroskops zu beseitigen.

Zur Lösung dieser Aufgabe ist ein Mikroskop der eingangs genannten Art erfindungsgemäss gekennzeichnet durch die im Anspruch 1 angegebene Kombination von Merkmalen. Vorteilhafte Weiterbildungen der erfindungsgemässen Mikroskops ergeben sich aus den abhängigen Ansprüchen.

Nachstehend werden Ausführungsbeispiele der vorliegenden Erfindung anhand der beiliegenden Zeichnungen näher erläutert. Es zeigen :

Fig. 1 in Frontansicht ein Mikroskop der bekannten, eingangs genannten Art.

Fig. 2 den Strahlengang im Mikroskop nach Fig. 1, wenn sich das Zwillingssystem des Mikroskops in seiner mittleren Lage befindet,

Fig. 3 den Strahlengang im Mikroskop nach Fig. 1, wenn sich das Zwillingssystem des Mikroskops in einer der seitlichen Lagen desselben befindet,

Fig. 4 in Frontansicht das Mikroskop nach Fig. 1, wenn sich das Zwillingssystem des Mikroskops in einer der seitlichen Lagen desselben befindet.

Fig. 5 einen horizontalen Schnitt IV-IV durch das Mikroskop nach Fig. 4, der die Blende im Mikroskop zeigt,

Fig. 6 den Strahlengang im Mikroskop nach Fig. 4,

Fig. 7 den Strahlengang im Mikroskop nach Fig. 1, bei dem dem Objektiv ein Umlenkprisma nachgeschaltet ist und

Fig. 8 eine Seitenansicht des Mikroskops aus Fig. 1.

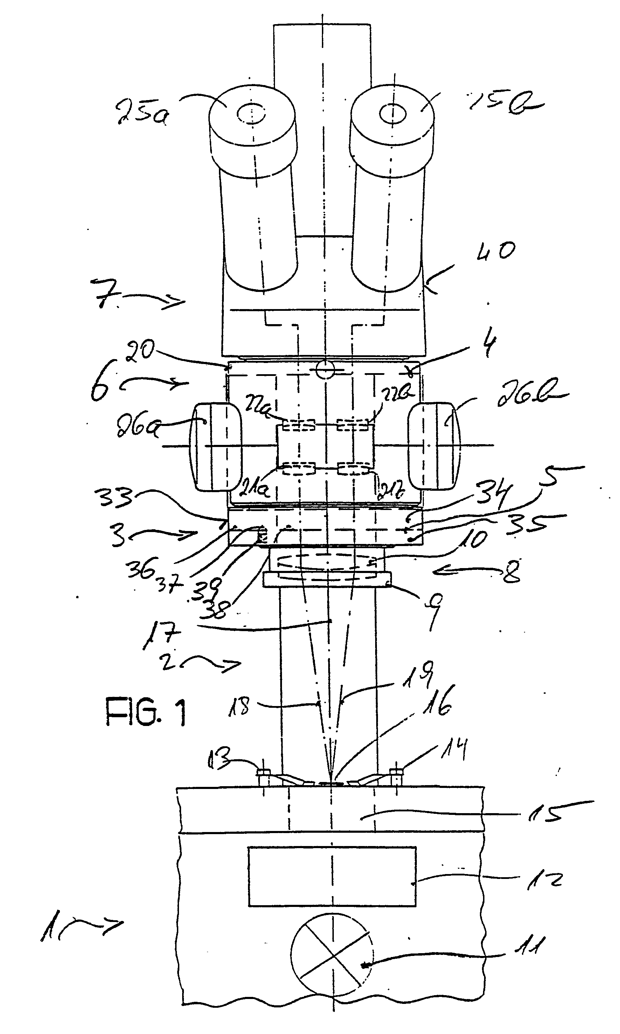

Das Mikroskop nach Fig. 1 weist ein Stativ 1 auf, der im vorliegenden Fall als Durchlichtstativ ausgeführt ist. Von diesem Stativ 1 ist in Fig. 1 allerdings nur ein Ausschnitt dargestellt, weil solche Druchlichtstative allgemein bekannt sind. Auf dem Stativ 1 ist eine Säule 2, vorteilhaft eine Profilsäule aufgerichtet, entlang welcher ein Triebkasten 3 vertikal bewegbar ist. Der Triebkasten 3 ist im wesentlichen L-förmig, wobei die vertikal verlaufende Partie 4 desselben hohl ist und die Profilsäule 2 umgibt. In dieser Partie des Triebkastens 3 sind an sich bekannte Mittel (nicht dargestellt) zur Verstellung des Triebkastens 3 entlang der Profilsäule 2 untergebracht, von welchen in Fig. 8 nur ein Bedienungselement z. B.

ein Knopf 30 dargestellt ist. Auf dem horizontalen Schenkel 5 des Triebkastens 3 befindet sich ein Optikträger 6. Auf diesem Optikträger 6 sitzt ein binokularer Tubus 7, der mit Hilfe einer Schraube 61 am Optikträger 6 befestigt ist. Die Unterseite des horizontalen Schenkels 5, der als Träger für die übrigen optischen Teile 6 und 7 des Mikroskops dient, ist mit einem Objektiv 8 versehen. Das Objektiv 8 enthält eine Fassung 9, in der sich das eigentliche Objektiv 10 bzw. die Objektivlinsen befinden.

Im Durchlichtstativ 1 ist eine Beleuchtungsvorrichtung schematisch dargestellt, die eine Glühbirne 11 und einen Kondensor 12 enthält. Auf der Oberseite des Stativs 1 befinden sich Objektklammern 13 und 14, deren Endpartien bis in den Bereich einer im Stativ 1 ausgeführten Oeffnung 15 verschwenkbar sind. Ueber dieser Oeffnung 15 ist ein mit dem Mikroskop zu beobachtendes Objekt 16 angedeutet, durch welches die optische Achse 17 des Systems hindurchgeht.

Die Oberseite des horizontalen Trägers 5 ist mit einem Absatz 31 (Fig. 8) versehen, der sich bis zum Ende des Trägers 5 erstreckt. Die Endpartie einer so entstandenen Zunge 32 ist mit einem Winkelstück 33 so versehen, dass der horizontale Schenkel 34 dieses Winkelstückes 33 auf der Oberseite der Zunge 32 aufliegt. Der vertikale Schenkel 35 des Winkelstückes 33 liegt auf der Stirnseite der Endpartie der Zunge 32 auf und er ist in dieser Lage mit Schrauben 62 befestigt. Die Seitenwand des Absatzes 31 und die Stirnwand des horizontalen Schenkels 34 des Winkelstückes 33 begrenzen seitlich eine Ausnehmung 60 welche als Führung für den Ansatz 27 dient.

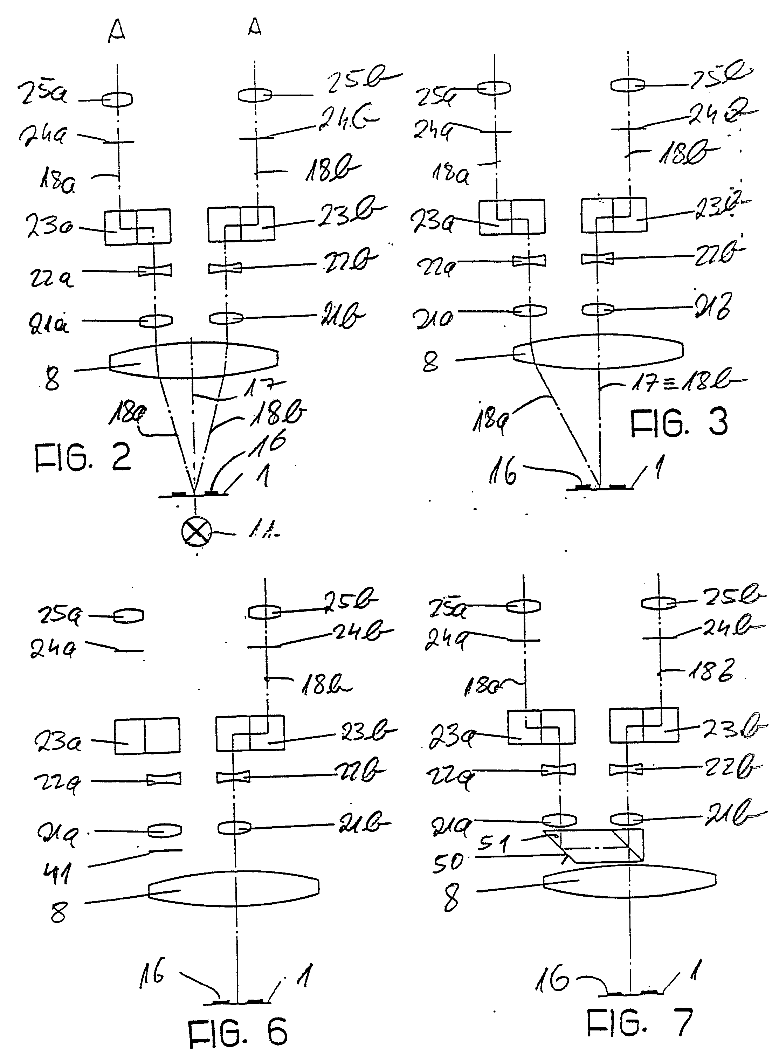

Mit 18a und 18b sind die Strahlengänge des Zwillingsoptiksystems bezeichnet. Der Optikträger 6 weist ein im wesentlichen zylinderförmiges Gehäuse 20 auf, in dem sich die Linsen 21a, 21b, 22a und 22b (siehe auch Fig. 2) eines Vergrösserungswechsler- und Tubus-Linsensystems sowie Bildaufrichtprismen 23a und 23b befinden. Auf die Prismen 23a und 23b folgen die Zwischenbildebenen 24a und 24b sowie die Okulare 25a und 25b. Die Betätigung der genannten optischen Elemente erfolgt mit Hilfe von Betätigungsknöpfen 26a und 26b. Der Index a bei den genannten Bezugsziffern bezeichnet die linke und der Index b die rechte Optiksystemhälfte.

An die Bodenfläche des Gehäuses 20 schliesst sich ein im wesentlichen viereckförmiger Ansatz 27 (Fig. 8) an dessen vordere und hintere Seitenflächen 28 und 29 zwischen der freien Stirnfläche des Winkelstückes 33 und der Seitenwand des Absatzes 31 geführt sind. Der Ansatz 27 kann als ein Rahmen ausgebildet, der mit Hilfe einer Schraube, eines Gewindes oder eines Bajonettverschlusses an das Gehäuse 20 angeschlossen ist. Diese Anordnung ermöglicht, dass der Optikträger 6 aus seiner mittleren Lage nach links oder nach rechts gegenüber der optischen Achse 17 des Hauptobjektivs bzw. des gesamten optischen Systems um einen bestimmten Betrag verschoben werden kann und dass der Optikträger 6, wenn erforderlich, vom Triebkasten 3 entfernt werden kann.

Es ist eine Arretiervorrichtung für die einzelnen Lagen des Optikträgers 6 innerhalb der Führungsstrecke im horizontalen Schenkel 32 vorgesehen. Diese kann, wie in Fig. 1 dargestellt ist, in einer Linie nebeneinander liegende Vertiefungen 36, 37 und 38 in der Unterseite des Ansatzes 27 sowie einen abgefederten Stift 39 aufweisen, der in der Zunge 32 eingelassen ist. Die Spitze dieses Stiftes 39 steht von der Oberfläche der Zunge 32 ab und kann in einer der genannten Vertiefungen 36 bis 38 einrasten und dadurch den Optikträger 6 in einer vorgegebenen Lage gegenüber dem Objektiv 8 halten.

Am Gehäuse 40 von binokularem Tubus 7 sind die bereits erwähnten Okulare 25a und 25b befestigt, während in diesem Gehäuse 40 sich die Bildaufrichtprismen 23a und 23b befinden. Da der binolulare Tubus 7 auf dem Optikträger 6 sitzt, ist er mit dem Optikträger 6 in bezug auf die Optikachse 17 ebenfalls seitlich verschiebbar.

Fig. 2 zeigt den Optikträger, der die Linsen 21a, 21b, 22a und 22b enthält, in einer mittleren und somit zur Systemachse 17 symetrischen Stellung. Hierbei rastet der abgefederte Stift 39 der Arretiervorrichtung in der mittleren Vertierung 37. In dieser Lage des Optikträgers 6 sind Stereoskopische Beobachtungen des Objektes 16 möglich.

Wenn jedoch eine achsiale Abbildung des Objektes 16 erforderlich ist, dann kann man den Optikträger 6 und somit auch den binokularen Tubus 7 seitlich soweit verschieben, bis die optische Achse eines der Zwillingssysteme a bzw. b mit der Objektivachse 17 zusammenfallt. Entsprechend diesen zwei möglichen Fällen sind die Positionen der übrigen zwei Ausnehmungen 36 bzw. 38 im Ansatz 27 ausgewählt, so dass die Verschiebung der Optik 6 und 7 aus der bisherigen Lage derselben in eine andere Lage schnell, leicht wiederholbar und genau durchgeführt werden kann. Schematisch ist eine der Seitenlagen des Optikträgers 6 und des Okulartubuses 7 in Fig. 3 dargestellt. Diese Mikroskopteile 6 und 7 sind so weit nach links verschoben worden, dass die optische Achse des rechten Zwillingssystems b mit der Achse 17 des Objektivs 8 zusammenfällt. Einer der wichtigsten Vorteile dieser Verschiebung des Optikträgers 6 und der Okulartubuses 7 gegenüber dem ortsfesten Objektiv 8 besteht darin, dass unabhängig von der Lage der Mikroskopteile 6 und 7 immer dieselbe Stelle des Objektes 16 durch das Objektiv 8 abgebildet wird.

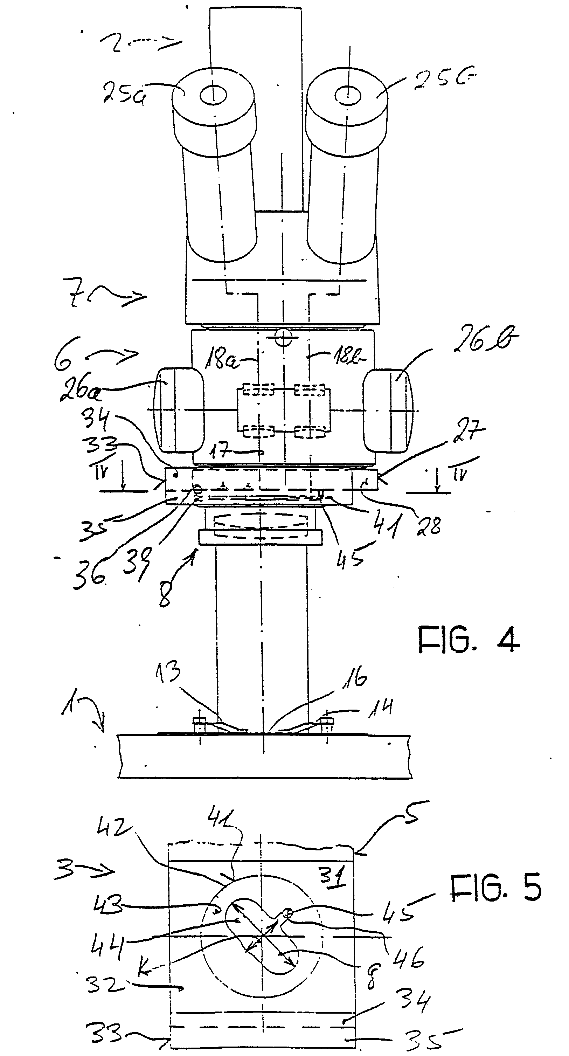

Es ist bekannt, dass die Qualität der Abbildung eines Objektes durch ein Objektiv in der Mitte desselben am grössten ist und dass diese Qualität gegen die Randpartie des Objektives hin abnimmt. Bei der Verschiebung der Mikroskopteile 6 und 7 in eine ihrer Endlagen kann es vorkommen, dass die Qualität der Abbildung, die durch die dem Rand des Objektivs 8 zugeordnete Hälfte des Zwillingssystems erzeugt wird, gering ist. Bei gleichzeitiger Beobachtung solcher durch die beiden Zwillingssysteme vermittelten Bilder des Objektes 16 könnte das Bild von schlechterer Qualität die Beobachtung des Bildes mit hervorragenden Qualität stören. Dieser Nachteil wird durch jene Ausführungsform des vorliegenden Mikroskopes beseitigt, die in den Fig. 4 bis 6 dargestellt ist.

Das in Fig. 4 dargestellte Mikroskop unterscheidet sich vom in Fig. 1 dargestellten Mikroskop vor allem darin, dass in den Strahlengang der jeweiligen Hälfte a bzw. b des Zwillingssystems eine Blende 41 einschiebbar ist, wenn sich die Mikroskopteile 6 und 7 in einer ihrer seitlichen Lage befinden. Gemäss Fig. 4 ist das Mikroskopstativ 1 bloss als eine Platte ausgeführt, auf die das Objekt 16 im Bereich der Objektklammern 13 und 14 angeordnet ist und auf der dieses Objekt 16 mit Auflicht (nicht dargestellt) beleuchtet werden kann. Die Mikroskopteile 6 und 7 sind in Fig. 4 nach rechts versetzt, so dass die Spitze des Stiftes 39 im Triebkasten 3 in der linken Vertiefung 36 des Optikträgers 6 eingerastet ist. Die Achse 18a der linken Hälfte a des Zwillingssystems fällt mit der Objektivachse 17 zusammen. Die andere Hälfte b des Zwillingssystems steht der Randpartie des Objektives 8 gegenüber und übernimmt von diesem ein Bild von verminderter Qualität. Um zu verhindern, dass das Bild von verminderter Qualität bis zum seitlich angeordneten Okular 25b gelangt, ist die bereits erwähnte Blende 41 vorgesehen.

Die genannte Blende 41 ist in Fig. 5 dargestellt, die einen horizontalen Schnitt IV-IV durch das Mikroskop gemäss Fig. 4 zeigt. In der Oberseite der Zunge 32 ist im Bereich des Absatzes 31 eine scheibenförmige Ausnehmung 42 ausgeführt, in der eine Scheibe 43 drehbar gelagert ist. Diese Scheibe 43 ist aus einem undruchsichtigen Material. Im mittleren Bereich derselben ist eine längliche, etwa nierenförmige Oeffnung 44 ausgeführt. Die Unterseite des Ansatzes 27, von dem in Fig. 4 die vordere Seitenwand 28 teilweise ersichtlich ist, ist mit einem nach unten gerichteten Bolzen 45 versehen, welcher in einer Oeffnung 46 liegt. Im in Fig. 5 dargestellten Fall schliesst sich diese zweite Oeffnung 46 an die erstgenannten Oeffnung 44 in der Blende 41 an und ist als ein Langloch ausgeführt. Wichtig ist, dass die zweite Oeffnung 46 ausserhalb der Mitte der Scheibe 43 liegt. Hieraus dürfte ersichtlich sein, dass sich die Scheibe 43 in der Ausnehmung 42 drehen kann, wenn der Optikträger 6, an dem der Bolzen 45 angebracht ist, gegenüber dem ortsfesten Triebkasten 3 verschoben wird.

Wenn sich der Optikträger 6 in seiner mittleren Stellung befindet, d. h. wenn sich die Objektivachse 17 zwischen den Systemachsen 18a und 18b befindet, dann erstreckt sich die grössere Abmessung g der länglichen und etwa elipsenförmigen Oeffnung 44 in der Scheibe 43 in horizontaler Richtung. In diesem Fall besteht eine Sichtverbindung zwischen den beiden Teilsystemen a und b und dem Objektiv 8. Hierbei gehen die Lichtstrahlen des linken Teilsystems a durch die linke Hälfte der Oeffnung 44 hindurch, wähend die Lichtstrahlen des rechten Teilsystems b durch die rechte Hälftte der Oeffnung 44 in der Scheibe 43 hindurchgehen. Der Bolzen 45 befindet sich bei dieser Lage der Scheibe 43 oberhalb der Oeffnung 44 und praktisch in der Mitte der grösseren Länge g derselben. Zudem befindet sich der Bolzen 45 im unteren Bereich des Langloches 46.

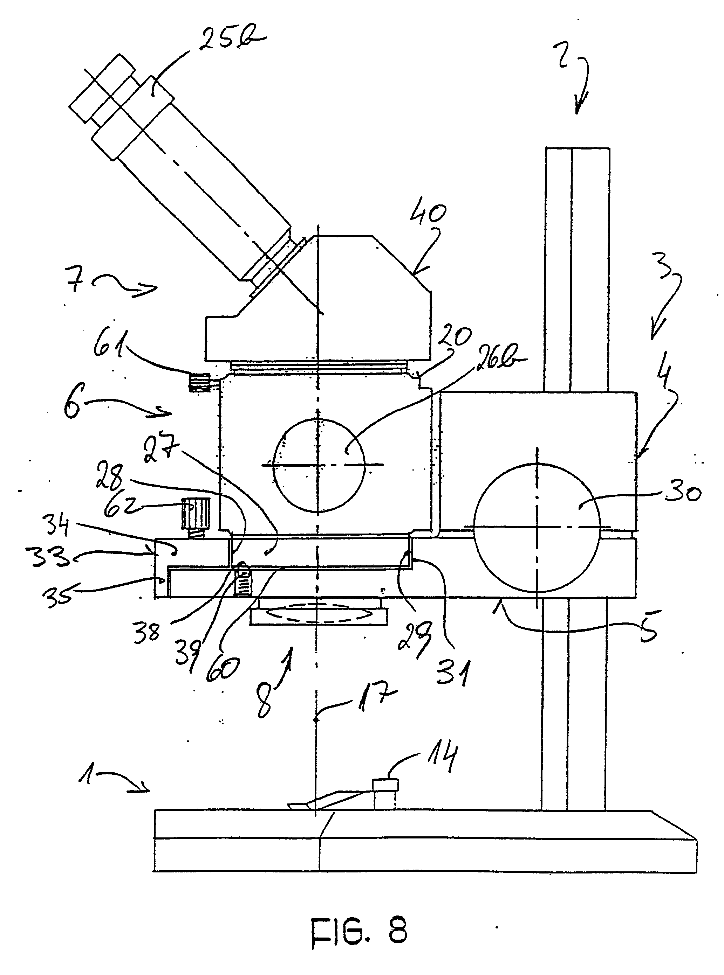

Wenn man den Optikträger 6 nach rechts verschiebt, so verschiebt sich mit diesem auch der Bolzen 45 nach rechts. Dieser steht jedoch mit dem Langloch 46 in der Scheibe 43 im Eingriff, so dass sich diese sonst ortsfeste Scheibe 43 um ihre Mitte in der Ausnehmung 42 dreht. Dabei gelangen undurchsichtige Partien der Scheibe 43 in den Bereich der bisherigen Strahlengänge a und b, die ausserhalb der Mitte des Objektives 8 und somit auch asserhalb der Mitte der Scheibe 43 bisher lagen. Da die Oeffnung 44 in der Scheibe 43 eine bestimmte Breite k aufweist, ist in der Mitte der Scheibe 43 immer eine Oeffnung vorhanden, unabhängig von der Drehlage der Scheibe 43. Beim seitlichen Verschieben des Optikträgers b, gelangt eines der Teilsysteme, im vorliegenden Fall das linke Teilsystem a in den mittleren Bereich der Scheibe 43 und somit auch in den mittleren Bereich des Objektives 8 so dass eine Sichtverbindung zwischen diesem Teilsystem a und dem Objektiv 8 besteht. Zwischen dem anderen Teilsystem b und dem Objektiv 8 liegt jedoch eine der undurchsichtigen Partien der scheibenförmigen Blende 43 und deswegen gelangt das Bild von schlechterer Abbildungsgüte in dieses Teilsystem b nicht. Diese Situation ist in Fig. 6 schematisch angedeutet, wobei hier allerdings der alternative Fall dargestellt ist, in dem die Blende 41 zwischen dem linken Teilsystem a und dem Objektiv 8 liegt.

Soll die Beobachtung des Objektes 16 auch beim senkrechten Strahlengang mit hoher Abbildungsgüte binokular möglich sein, so kann ein Strahlenteiler 50 einer bekannten Art in den Gang der senkrechten Strahlen eingeschoben werden, wie dies in Fig. 7 angedeutet ist. Ein Teil der durch die Mitte des Objektives hindurchgehenden Strahlen wird mit Hilfe eines im Strahlenteiler 50 vorhandenen Umlenkprismas 51 in das linke Teilsystem a abgelenkt, so dass im linken Okular 25a das Bild erscheint wie im rechten Okular 25b.

Das Mikroskop weist eine einfache Konstruktion auf. Es lässt sich kostengünstig herstellen und auch leicht bedienen, wobei dieselbe Stelle des Objektes sich stereoskopisch bzw. binokular oder monokular aber mit erhöhter Güte der Abbildung beobachten lässt. Mit Hilfe des beschriebenen Mikroskops können Stereobildpaare mit beliebiger Stereobasis hergestellt werden. Ueber dem Zentrum des Objektives 8 lässt sich entweder das linke oder das rechte optische Teilsystem anordnen, was ermöglicht, den individuellen Wünchen des Benützers des Mikroskops zu entsprechen. Der Benutzer kann also individuell sein linkes oder rechtes Auge zum Scharfstellen beim Photographieren oder zum Einstellen oder Ablesen einer Messmarke am Objekt bevorzugen. Mit Hilfe der Blende 41 kann der ausserhalb des Objektivzentrums liegende Strahlengang unterbrochen werden, so dass das eine verminderte Güte aufweisende Bild bei binokulare Beobachtung des Objektes nicht bis ins Auge des Mikroskopbenützers gelangen kann. Wie beschrieben, wird die Blende 41 durch die beweglichen Teile 6 und 7 des Mikroskops automatisch betätigt.

## Patentansprüche

1. Mikroskop mit einer Säule (2) und einem daran abgestützten Triebkasten (3), einem am Triebkasten (3) ortsfest abgestützten Objektiv (8) mit einer entsprechenden Objektivachse (17), zwei Okularen (25a, 25b) mit je einer entsprechenden Okularachse (18a, 18b), einem binokularen Tubus (7), auf dem die Okulare (25a, 25b) angeordnet sind und der auf einem Optikträger (6) befestigt ist, welcher seinerseits am Triebkasten (3) verschiebbar abgestützt ist, wobei in jeder Verschiebungsstellung die Objektivachse (17) und die Okularachsen (18a, 18b) stets zueinander parallel bleiben, in einer zentrischen Verschiebungsstellung die beiden Okularachsen (18a, 18b) im wesentlichen symmetrisch zur Objektivachse (17) liegen und in mindestens einer versetzten Verschiebungsstellung eine der Okularachsen (18b) im wesentlichen mit der Objektivachse (17) übereinstimmt, dadurch gekennzeichnet, dass eine Blende (41) vorgesehen ist, die, wenn sich der Optikträger (6) in bezug auf den Triebkasten (3) in der versetzten Verschiebungsstellung befindet, den Zutritt von Licht vom Objektiv (8) zu demjenigen Okular (25a) verhindert, dessen Okularachse (18a) mit der Objektivachse (17) nicht übereinstimmt.

2. Mikroskop nach Anspruch 1, dadurch gekennzeichnet, dass der Triebkasten (3) eine erste Partie (4) aufweist, welche die Säule (2) umschliesst und an die sich eine zweite Partie (5) anschliesst, die als flache Zunge ausgebildet ist und in welcher ein Führungsmittel (27, 28, 29, 31, 33, 60) für die Verschiebung des Optikträgers (6) am Triebkasten (3) vorgesehen ist.

3. Mikroskop nach Anspruch 2, dadurch gekennzeichnet, dass in der zweiten Partie (5) eine sich quer zu deren Längsrichtung erstreckende erste Ausnehmung (60) vorgesehen ist, während der Optikträger (6) auf seiner Unterseite mit einem Ansatz (27) verbunden ist, der in der ersten Ausnehmung (60) liegt und mit ihr zusammen das Führungsmittel bildet.

4. Mikroskop nach Anspruch 3, dadurch gekennzeichnet, dass der Ansatz (27) als an das Gehäuse (20) des Optikträgers (6) anschliessbarer Rahmen ausgebildet ist.

5. Mikroskop nach Anspruch 3, dadurch gekennzeichnet, dass eine zwischen der zweiten Partie (5) und dem Ansatz (27) wirkende Rastvorrichtung (36, 37, 38, 39) zur Sicherung von vorbestimmten Verschiebungsstellungen vorgesehen ist.

6. Mikroskop nach Anspruch 5, dadurch gekennzeichnet, dass die Rastvorrichtung einen in der zweiten Partie (5) eingelassenen abgefederten Stift (39) aufweist und der Ansatz (27) mit Vertiefungen (36, 37, 38) versehen ist, in die der Stift jeweils dann einrastet, wenn die tatsächliche Verschiebungsstellung mit einer der vorbestimmten Verschiebungsstellungen übereinstimmt.

7. Mikroskop nach Anspruch 2, dadurch gekennzeichnet, dass in der zweiten Partie (5) unterhalb der ersten Ausnehmung (60) eine zweite Ausnehmung (42) vorgesehen ist, in der eine mit einer Öffnung (44) versehene Scheibe (43) drehbar gelagert ist, und am Ansatz (27) ein Bolzen (45) vorgesehen ist, der zum Umsetzen einer Verschiebung des Ansatzes (27) in eine Drehung der Scheibe (43) mit einer Ausnehmung (46) der Scheibe (43) im Eingriff steht, wobei die Öffnung (44) länglich und mit solchen Abmessungen geformt ist, dass bei versetzter Verschiebungsstellung die Breite (k) der Öffnung (44) die Lichtstrahlen vom Objektiv (8) zu einem der Okulare (25a, 25b) und bei zentrischer Verschiebungsstellung die Länge (g) der Öffnung (44) die Lichtstrahlen vom Objektiv (8) zu beiden Okularen (25a, 25b) ungehindert passieren lässt.

8. Mikroskop nach Anspruch 1, dadurch gekennzeichnet, dass ein mit einem Umlenkprisma (51) versehener Strahlenteiler (50) in die Objektivachse (17) in Nähe des Objektivs (8) auf dessen den Okularen (25a, 25b) zugewandten Seite einschiebbar ist, um in der zentrischen Verschiebungsstellung die Hälfte des Lichts, das vom Objektiv (8) zu demjenigen Okular (25b) gelangt, dessen Okularachse (18b) mit der Objektivachse (17) übereinstimmt, auf dasjenige Okular (25a) abzuzweigen, dessen Okularachse (18a) mit der Objektivachse (17) nicht übereinstimmt.

9. Mikroskop nach Anspruch 1, dadurch gekennzeichnet, dass eine in bezug auf die Säule (2) ortsfest angeordnete Beleuchtungsvorrichtung (11, 12) vorgesehen ist, damit die Verschiebung des Optikträgers (6) sowohl gegenüber dem Triebkasten (3) als auch gegenüber der Beleuchtungsvorrichtung (11, 12) erfolgt.

### Claims

1. A microscope comprising an upright (2) having a motion box (3) supported thereon, an objective (8) fixedly supported at the motion box (3) and having a corresponding objective axis (17), two oculars (25a, 25b) each having a corresponding ocular axis (18a, 18b), a binocular tube (7) having the oculars (25a, 25b) mounted thereon and which is fixed at an optical device support (6) itself supported slidingly at the motion box (3), whereby in each sliding position the objective axis (17) and the ocular axes (18a, 18b) always remain parallel to each other, in a centered sliding position both ocular axes (18a, 18b) are positioned substantially symmetrically in respect of the objective axis (17) and in at least one displaced sliding position one of the ocular axes (18b) substantially coincides with the objective axis (17), characterized in that there is provided a diaphragm (41) which prevents light from the objective (8) from attaining that ocular (25a) whose ocular axis (18a) does not coincide with the objective axis (17) when the optical device support (6) is located in respect of the motion box (3) in the displaced sliding position.

2. A microscope according to claim 1, characterized in that the motion box (3) comprises a first part (4) which surrounds the upright (2) and has adjacent thereto a second part (5) constructed as a flat tongue and having provided therein a guide means (27, 28, 29, 31, 33, 60) for displacing the optical device support (6) at the motion box (3).

3. A microscope according to claim 2, characterized in that there is provided in the second part (5) a first recess (60) extending across its longitudinal direction, whereas the optical device support (6) is connected at its lower side with an attachment (27) located in the first recess (60) and together with the latter, constitutes the guide means.

4. A microscope according to claim 3, characterized in that the attachment (27) is constructed as a frame which can be connected to the casing (20) of the optical device support (6).

5. A microscope according to claim 3, characterized in that there is provided a locking device which cooperates with the second part (5) and the attachment (27) for securing predetermined sliding positions.

6. A microscope according to claim 5, characterized in that the locking device comprises a spring-mounted pin inserted in the second part (5), and the attachment (27) is provided with depressions (36, 37, 38) in which the pin engages each time the actual sliding position coincides with one of the predetermined sliding positions.

7. A microscope according to claim 2, characterized in that in the second part (5) there is provided below the first recess (60) a second recess (42) in which there is rotatably journalled a disk (43) having an opening (44), and at the attachment (27) there is provided a stud (45) which cooperates with an opening (46) of the disk (43) for converting a displacement of the attachment (27) to a rotation of the disk (43), whereby the opening (44) has an elongated from and such dimensions that in the displaced sliding position the width (k) of the opening (44) allows the unhindered passage of light from the objective (8) to one of the oculars (25a, 25b) and in the centered sliding position the length (g) of the opening (44) allows the unhindered passage of light from the objective (8) to both oculars (25a, 25b).

8. A microscope according to claim 1, characterized in that a beam splitter (50) provided with an inclination prism (51) can be inserted on the objective axis (17) in the vicinity of the objective (8) on that side of the latter which is facing the oculars (25a, 25b) for diverting, in the centered sliding position, one half of the light which is allowed to pass from the objective (8) to that ocular (25b) whose ocular axis (18b) coincides with the objective axis (17), towards that ocular (25a) whose ocular axis (18a) does not coincide with the objective axis (17).

9. A microscope according to claim 1, characterized in that there is provided an illuminating device (11, 12) mounted fixedly in respect of the upright (2), whereby the optical device support (6) is displaced both in respect of the motion box (3) and in respect of the illuminating device (11, 12).

**Revendications**

1. Microscope comportant une colonne (2) sur laquelle est supporté un boîtier moteur (3), un objectif (8) supporté de façon fixe sur le boîtier moteur (3) et comportant un axe d'objectif (17) correspondant, deux oculaires (25a, 25b) comportant chacun un axe d'oculaire (18a, 18b) correspondant, un tube binoculaire (7) sur lequel sont montés les oculaires (25a, 25b) et qui est fixé sur un dispositif support d'optique (6) lui-même supporté à coulissement sur le boîtier moteur (3), l'axe d'objectif (17) et les axes d'oculaire (18a, 18b) demeurant toujours parallèles les uns aux autres dans chaque position de coulissement, les deux axes d'oculaire (18a, 18b) étant, dans une position de coulissement centrée, positionnés de façon essentiellement symétrique par rapport à l'axe d'objectif (17), et dans au moins une position de coulissement déplacée un des axes d'oculaire (18b) coïncidant essentiellement avec l'axe d'objectif (17), caractérisé en ce que l'on a prévu un diaphragme (41) qui empêche la lumière provenant de l'objectif (8) d'atteindre celui des oculaires (25a) dont l'axe d'oculaire (18a) ne coïncide pas avec l'axe d'objectif (17) lorsque le dispositif support d'optique (6) est disposé par rapport au boîtier moteur (3) dans la position de coulissement déplacée.

2. Microscope selon la revendication 1, caractérisé en ce que le boîtier moteur (3) comporte une première pièce (4) qui entoure la colonne (2) et comporte adjacente à elle une deuxième pièce (5) construite comme une languette plate et pourvue d'un moyen du guidage (27, 28, 29, 31, 33, 60) pour déplacer le dispositif support d'optique (6) sur le boîtier moteur (3).

3. Microscope selon la revendication 2, caractérisé en ce qu'il est prévu dans la deuxième pièce (5) un premier logement (60) qui s'étend transversalement à sa direction longitudinale, tandis que le dispositif support d'optique (6) est relié en son côté inférieur à un tenon (27) situé dans le premier logement (60) et qui ensemble avec ce dernier constitue le moyen de guidage.

4. Microscope selon la revendication 3, caractérisé en ce que le tenon (27) est construit comme un cadre qui peut être relié au boîtier (20) du dispositif support d'optique (6).

5. Microscope selon la revendication 3, caractérisé en ce qu'il est prvéu un dispositif de verrouillage qui coopère avec la deuxième pièce (5) et le tenon (27) pour assurer des positions de coulissement prédéterminées.

6. Microscope selon la revendication 5, caractérisé en ce que le dispositif de verrouillage comporte un goujon monté à ressort dans la deuxième pièce (5) et le tenon (27) est pourvu de dépressions (36, 37, 38) avec lesquelles le goujon coopère chaque fois que la position de coulissement actuelle coïncide avec une des positions de coulissement prédéterminées.

7. Microscope selon la revendication 2, caractérisé en ce que dans la deuxième pièce (5) il est prévu sous le premier logement (60) un deuxième logement (42) dans lequel est monté sur palier à rotation un disque (43) comportant une ouverture (44), et sur le tenon (27) il est prévu un goujon (45) qui coopère avec une ouverture (46) du disque (43) pour convertir un déplacement du tenon (27) en une rotation du disque (43), tandis que l'ouverture (44) est de forme allongée et de telles dimensions que dans la position de coulissement déplacée la largeur (k) de l'ouverture (44) permet le libre passage de la lumière provenant de l'objectif (8) vers l'un des oculaires (25a, 25b) et dans la position de coulissement centrée la longueur (g) de l'ouverture (44) permet le libre passage de la lumière provenant de l'objectif (8) vers les deux oculaires (25a, 25b).

8. Microscope selon la revendication 1, caractérisé en ce qu'un séparateur de faisceau lumineux (50) pourvu d'un prisme de déviation (51) peut être inséré sur l'axe d'objectif (17) au voisinage de l'objectif (8) sur le côté de celui-ci qui fait face aux oculaires (25a, 25b) afin de dériver, dans la position de coulissement centrée, une moitié de la lumière qui peut passer de l'objectif (8) vers celui des oculaires (25b) dont l'axe d'oculaire (18b) coïncide avec l'axe d'objectif (17), vers celui des oculaires (25a) dont l'axe d'oculaire (18a) ne coïncide pas avec l'axe d'objectif (17).

9. Microscope selon la revendication 1, caractérisé en ce qu'il est prévu un dispositif d'illumination (11, 12) monté de façon fixe par rapport à la colonne (2), de façon que le dispositif support d'optique (6) soit déplacé à la fois par rapport au boîtier moteur (3) et par rapport au dispositif d'illumination (11, 12).

FIG. 1

FIG. 2

FIG. 3

FIG. 6

FIG. 7

2

FIG. 4

FIG. 5

FIG. 8